# EUROPEAN PATENT APPLICATION

(11) **EP 2 306 591 A1**
(43) Date of publication of application: **06.04.2011**
(21) Application number: 10176839.8
(22) Date of filing: 15.09.2010
(51) Int. Cl.: H01R 9/26, H02B 1/20, H02B 1/21, H01R 13/625

(54) **Connector module and plug-in module system**

(30) Priority: 30.09.2009 DE 202009013181 U
(71) Applicant: Tyco Electronics AMP GmbH, 64625 Bensheim (DE)
(72) Inventor: Tille, Werner, 64589, Stockstadt (DE); Kraemer, Rudolf, 64686, Lauertal (DE)
(74) Representative: Patentanwaltskanzlei WILHELM & BECK

(57) **Abstract**

The invention relates to a connector module 13 for electrically connecting an electrical component 17 to a distributing bus bar, wherein the connector module 13 has a rotary closure 2 comprising operative elements 38, 39 which fasten the connector module 13 to the distributing bus bar 20 and the electrical component 17.

## Description

The invention relates to a connector module for electrically connecting an electrical component to a distributing bus bar, wherein the connector module has a rotary closure comprising operative elements which fasten the connector module to the distributing bus bar and the electrical component.

Conventionally, industrial installations in distribution boxes are connected to a power supply, control technology or safety technology. Numerous systems are known for this purpose. In this case, individual electrical components, for example a switching module, a contactor or an overload module, are fastened in the distributor housing by means of a top hat rail. In order to electrically connect the electrical components to one another, the modules are connected to one another by cables or to a current-carrying distributing bus bar.

The object of the invention is to rapidly and reliably connect the electrical components to the current-carrying distributing bus bar.

This object is achieved by a connector module according to claim 1 and by a plug-in module system according to claim 15. Preferred embodiments are specified in the dependent claims.

According to the invention, it has been found that the electrical component can be rapidly and reliably connected to be distributing bus bar by means of a connector module. In this case, the connector module has a rotary closure with operative elements which fasten the connector module to the distributing bus bar and the electrical component.

This has the advantage that the electrical component does not have to be connected to the power supply by means of manual installation of cables. Thus, errors in the installation of the cables can be virtually ruled out and the assembly but also the disassembly of the connector module can be rapidly brought about.

In one embodiment of the invention, the rotary closure has a latching bolt with at least two engagement elements as operative elements which each engage with an engagement opening in the distributing bus bar and the electrical component. In this way, the connector module can be reliably fastened to the distributing bus bar and the electrical component.

In one embodiment of the invention, the latching bolt has at least one locking cam which is associated with a resilient interlocking of the connector module. In this way, accidental turning of the rotary closure from a defined position can be avoided.

In a further embodiment of the invention, the latching bolt has a bearing face which at least partly radially surrounds the latching bolt and is associated with an inner bearing face of the connector module. In this way, an axial end position of the latching bolt can easily be defined in one direction.

In one embodiment of the invention, a rotary knob is pluggably arranged at a first axial end of the latching bolt, the engagement elements being arranged opposite the rotary knob at a second axial end of the latching bolt and releasing the connector module as a function of their rotational position. In this way, the latching bolt of the connector module can be actuated without a tool with the aid of the rotary knob.

In a further embodiment of the invention, the rotary knob has at least one latching element which is arranged on a circumferential face of a cylindrical portion of the rotary knob and is designed to engage behind the cover of the connector module during turning of the rotary knob from an assembly position and to fasten the rotary knob to the cover. The cover is connected to the housing of the connector module, so in this way the connector module can be detached from the distributing bus bar and the electrical component by pulling on the rotary knob in an unlatched position of the latching bolt.

In a further embodiment of the invention, the rotary knob has at least one stop stud which is arranged radially to the axis of rotation of the rotary knob and which is associated with an abutment face on the cover of the connector module. In this way, accidental turning into an undesired position of the rotary knob can be reliably avoided.

In a further embodiment of the invention, a stop element is arranged on the cover of the connector module, the stop stud sliding over the stop element in one direction of rotation of the rotary knob and blocking turning of the rotary knob in the opposite direction. This has the advantage that turning of the rotary knob back into an assembly position is prevented.

In a further embodiment of the invention, the rotary knob has a retainer for the latching bolt, the retainer and also the axial end of the latching bolt being embodied as a form-fitting connection in relation to a rotational movement. In this way, the latching bolt can be turned by turning the rotary knob.

In a further embodiment of the invention, the axial end of the latching bolt has, in the region of the form-fitting connection on a side face of the latching bolt, a web which engages with a groove in the retainer. In this way, the orientation of the latching bolt to the rotary knob can be reliably defined.

In a further embodiment of the invention, the rotary knob has at least one gripping face which is embodied in an elongate manner and protrudes beyond the diameter of the cylindrical portion. In this way, the orientation of the latching bolt can be indicated to the operator.

In a further embodiment of the invention, the connector module has at an underside at least one closure element which closes a contact opening in the electrical component, through which a connecting element is guided. In this way, infiltration of moisture or dirt at the contact opening into the electrical component can be avoided.

In a further embodiment of the invention, at least one connecting element, which is at least partly surrounded by a first guide element, is arranged at the underside of the connector module. In this way, plugging of the connecting element into a distributing bus bar by means of the first guide element can be facilitated.

In a further embodiment of the invention, a second guide element, which engages with a slot in the electrical component, is arranged on the connector module on a side face of the housing. In this way, the connector module can be secured in relation to the electrical component in two directions of displacement.

In a further embodiment of the invention, the second guide element has a third abutment face which is arranged at right angles to the distributing bus bar and is associated with a fourth abutment face of the electrical component. In this way, displacement of the connector module parallel to the distributing bus bar can be prevented.

In a further embodiment of the invention, the connector module has a first obliquely arranged housing face with which a second obliquely arranged housing face of the electrical component is associated. In this way, plugging of the connector module onto the electrical component can be facilitated in that the two oblique housing faces guide the connector module into the plug-in position.

The invention will be described hereinafter in greater detail with reference to the drawings, in which:
Figure 1 is a perspective illustration of a plug-in module system;
Figure 2 is an exploded illustration of a first connector module according to a first embodiment;
Figure 3 is an exploded illustration of the first connector module shown in Figure 2 in the partly assembled state;
Figure 4 is a side view of a latching bolt;
Figure 5 and Figure 6 are various perspective views of the latching bolt;
Figure 7 is a side view of a rotary knob;
Figure 8 is a plan view onto the rotary knob;
Figure 9 is a perspective view of the rotary knob;
Figure 10 shows a detail in a plan view onto a region of a rotary closure;
Figure 11 is a sectional view of the connector module taken along the sectional plane A-A shown in Figure 10;
Figure 12 is a plan view of a detail of a cover in the assembly position;
Figure 13 is a slightly perspective illustration of the cover of the second connector module;
Figure 14 is a plan view onto a housing of the second connector module;
Figure 15 is a plan view onto the second connector module with built-in components;
Figure 16 is a perspective view from below of the second connector module;
Figure 17 is a perspective view of the plug-in module system; and
Figure 18 is a side view with a partial section of the plug-in module system.

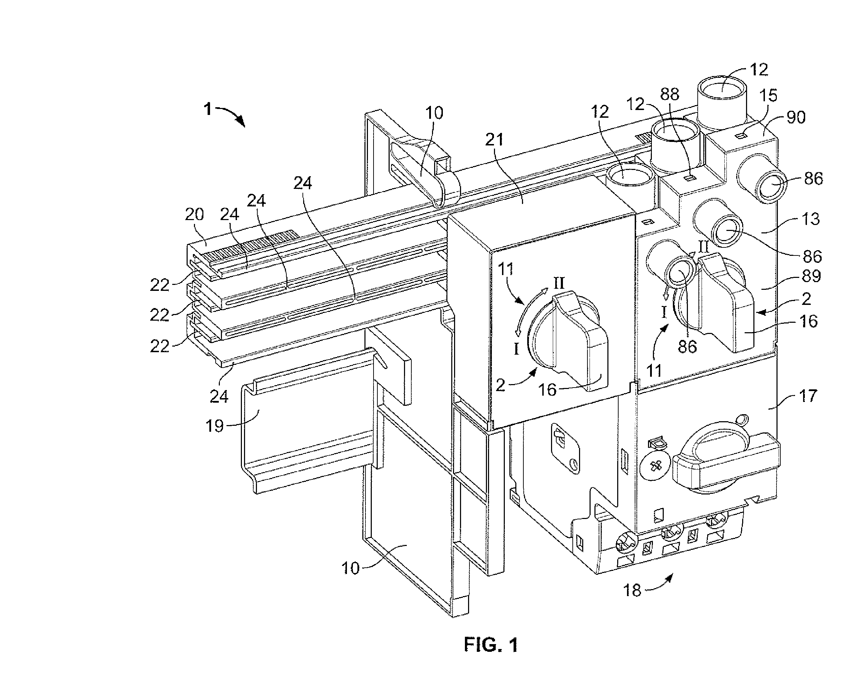

Figure 1 is a perspective illustration of a plug-in module system 1. The plug-in module system 1 comprises in this case a top hat rail 19 which is fastened in a housing (not shown) of a distribution box. A first holder 10 is fastened to the top hat rail 19 at a right angle. For reasons of stability, a second holder (not shown) is conventionally also arranged on the top hat rail 19. The two holders 10 surround and fasten a distributing bus bar 20 which is arranged parallel to the top hat rail 19 and has a plurality of power strips 22 which are isolated from one another by separating strips 23. An electrical component 17, which has a connection strip 18 for connecting an electric motor, for example, is also fastened to the top hat rail 19. A first connector module 13 is arranged on the distributing bus bar 20 at the level of the electrical component 17. In addition to the first connector module 13, a second connector module 21 is fastened to the distributing bus bar 20. The two connector modules 13, 21 each have a rotary knob 16 with a rotary closure 2 and a marking 11. The marking 11 includes an opened (I) and a closed state (II) of the rotary closure 2.

The first connector module 13 further comprises a plurality of laterally outgoing cable openings 12 and also a plurality of associated openings 86 arranged at right angles at an upper side of a first cover 89. Cables (not shown), which are fastened in the first connector module 13 via screwing elements (not shown), are guided into the first connector module 13 through the cable openings 12. The further openings 86 allow access to the screwing elements without opening or closing the connector module 13 using a tool. The first cover 89 of the first connector module 13 is fastened to a first housing 90 by means of interlocking elements 15 which engage with interlocking openings 88.

Power is supplied into the plug-in module system 1 by means of the cables connected via the cable openings 12. The first connector module 13 is connected backward to the distributing bus bar 20 and feeds the current from the cables into the individual power strips 22 via first electrical plug-in contacts. Furthermore, the first connector module 13 connects the electrical component 17 to the distributing bus bar 20 via the first and second plug-in contacts. The second plug-in contacts are plugged into contact sockets of the electrical component. Like the first connector module 13, the second connector module 21 can be connected to a second electrical component (not shown) in order in this way to tap the current from the distributing bus bar 20 and to conduct it to the second electrical component (not shown). For this purpose, the first plug-in contacts are plugged into the distributing bus bar 20. The second plug-in contacts are plugged into the contact sockets of the electrical component and connect the first plug-in contacts to the electrical component.

The rotary knob 16, which both connector modules 13, 21 have, serves to fasten the connector modules 13, 21 to the distributing bus bar 20 and the electrical component 17 by means of a latching bolt (not shown).

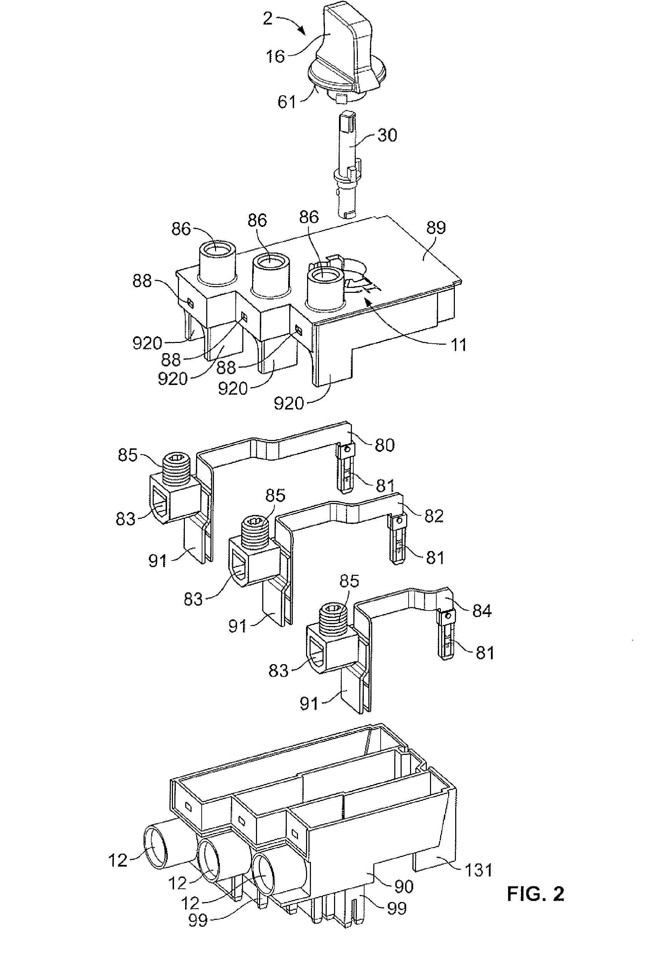

Figure 2 is an exploded illustration of the first connector module 13. The first connector module 13 comprises the rotary knob 16 on which a latching bolt 30 is arranged. A first axial contact face 61 of the rotary knob 16 is associated with the first cover 89 of the first connector module 13. The first cover 89 has in this case at its underside a plurality of cover elements 920 which protrude into the first housing 90. The first housing 90 has current guides 80, 82, 84 of different lengths which are arranged in mutually separated regions of different lengths of the first housing 90. Furthermore, corresponding first guide elements 99 are arranged at an underside of the first housing 90 for engaging with the power strips 22 in order to facilitate the introduction of the first connecting elements 91 into the power strips 22 and to establish an electrical contact between the power strip 22 and the current guide 80, 82, 84. The first connecting element 91 is embodied in this case for example in a U-shaped manner.

The current guides 80, 82, 84 are each connected at one end to a second connecting element 81. At the end of the current guides 80, 82, 84 that opposes the second connecting element 81, the first connecting element 91 is arranged with a clamping element 83 and the associated screwing element 85. Both the first connecting element 91 and the second connecting element 81 protrude on the underside from the first housing 90. The clamping elements 83 serve to receive the cable (not shown), the cables being fastened in the clamping element 83 by the screw 85.

The current introduced via the cables is forwarded to the power strips 22 shown in Figure 1 of the distributing bus bar 20 by means of the first connecting elements 91. For this purpose, the first connecting elements 91 are plugged into one or more power strips 22. Furthermore, the current is also conducted by means of the second connecting elements 81 to the electrical component 17 connected thereto via the current guide 80, 82, 84. In order to ensure a large cross section of the current guides 80, 82, 84, the current guides have flat rails.

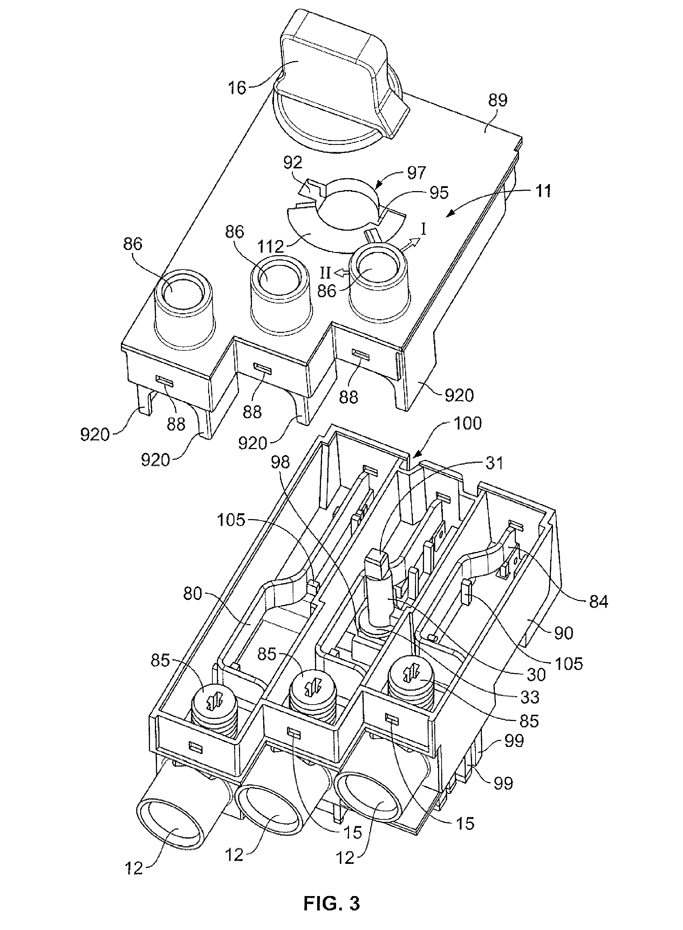

Figure 3 is an exploded view drawing of the connector module 13 in the partly assembled state. In the first housing 90, the current guides 80, 82, 84 are fastened to the floor of the first housing 90 by means of a plurality of fastening holders 105. The latching bolt 30 is arranged centrally in the first housing 90. The latching bolt 30 has an annular stop 33. The latching bolt 30 is guided through an opening in the floor of the first housing 90 and rests, with a first abutment face of the stop 33, against a bearing face 98 on the floor of the first housing 90. In order to reliably close the first housing 90, the housing 90 has on its side faces a plurality of interlocking elements 15 which engage with corresponding interlocking openings 88 on the first cover 89. Furthermore, the current guides 80, 82, 84 are additionally fastened in the first housing 90 by the interlocking of the first cover 89 by means of cover elements 920 arranged at the underside of the housing cover 89. The grading of the individual current guides 80, 82, 84 in their length results from the engagement of the connecting elements 91 of the current guides 80, 82, 84 with the different power strips 22 of the distributing bus bar 20.

Furthermore, the first cover 89 has a through-opening 97 having a circular circumferential contour 94. Two rectangular recesses 92, 95 are provided at opposing sides of the circumferential contour 94.

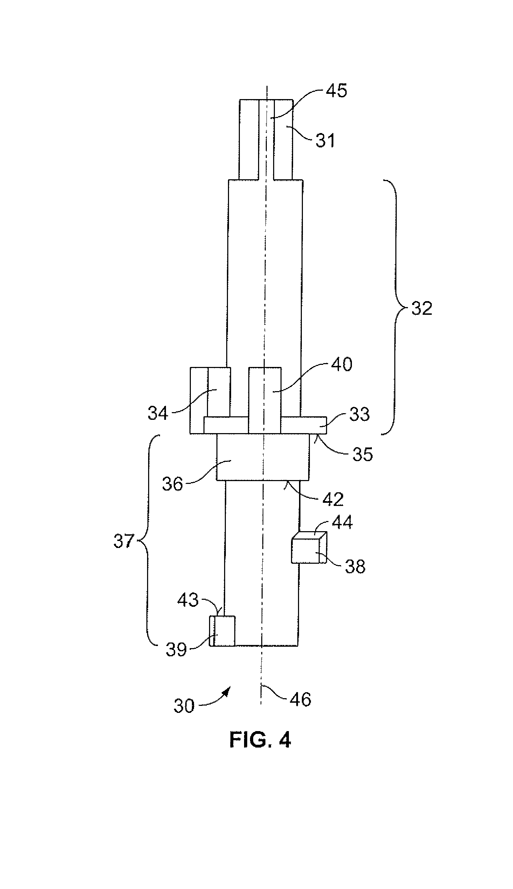

Figure 4 is a side view of the latching bolt 30. The latching bolt 30 is divided substantially into an upper portion 32 and a lower portion 37 which are separated by the annular stop 33 which radially surrounds the latching bolt 30. The stop 33 has a larger diameter than the upper and lower portions 32, 37. A square 31 is formed at the upper axial end of the latching bolt 30 for a form-fitting connection with the rotary knob 16. Shapes other than a square are in this case also conceivable for a form-fitting connection, for example a splined profile, a polygonal profile or a serrated profile. A first web 45 is also arranged on the square 31 on a side face in the axial direction.

A first abutment face 35, which is axially adjoined by a centring collar 36, is arranged in the lower portion 37 of the latching bolt 30 at the underside of the stop 33. The centring collar 36 is set back from the remainder of the lower portion 37 of the latching bolt 30 by means of a shoulder 42.

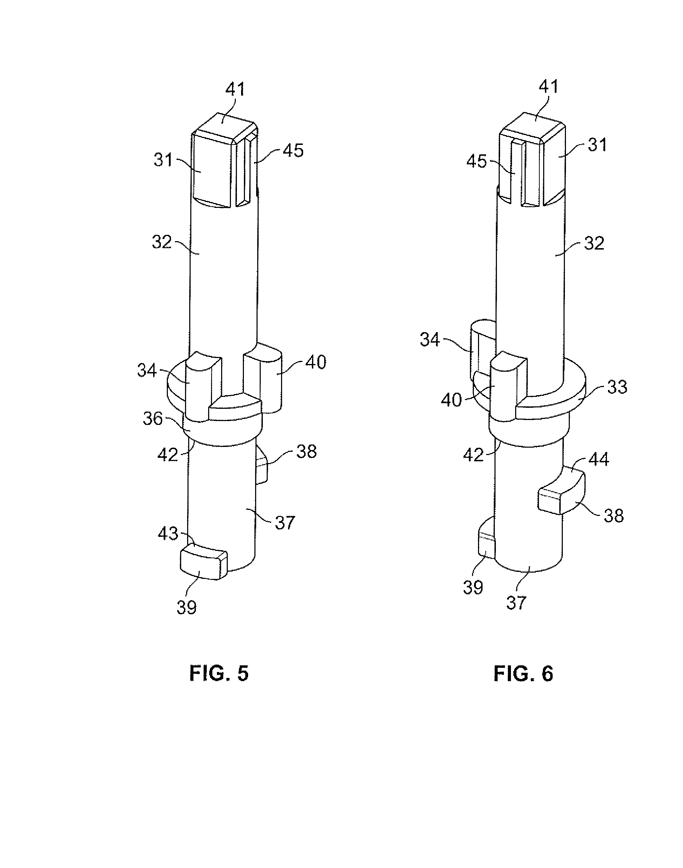

Figure 5 and Figure 6 are various perspective views of the latching bolt 30. In this case, the latching bolt 30 has at the lower end of the upper portion 32 on the stop 33 a plurality of locking cams 34, 40 which are radially offset from one another by about 90°. The two locking cams 34, 40 extend in this case axially along a part of the upper portion 32. Furthermore, it is also conceivable to arrange the locking cams 34, 40 at a different angle to each other.

Two engagement elements 38, 39 are also arranged in the lower portion 37. The first engagement element 38 is in this case radially offset by about 180° from the second engagement element 39 about an axis of rotation 46 of the connecting bolt 30. Furthermore, the two engagement elements 38, 39 are arranged on the latching bolt 30 at a different axial height. The two engagement elements 38, 39 each have a first or second fastening face 43, 44 which is arranged at the upper side of the two engagement elements 38, 39. It is also conceivable to arrange the two engagement elements 38, 39 at the same height or at a different angle to each other.

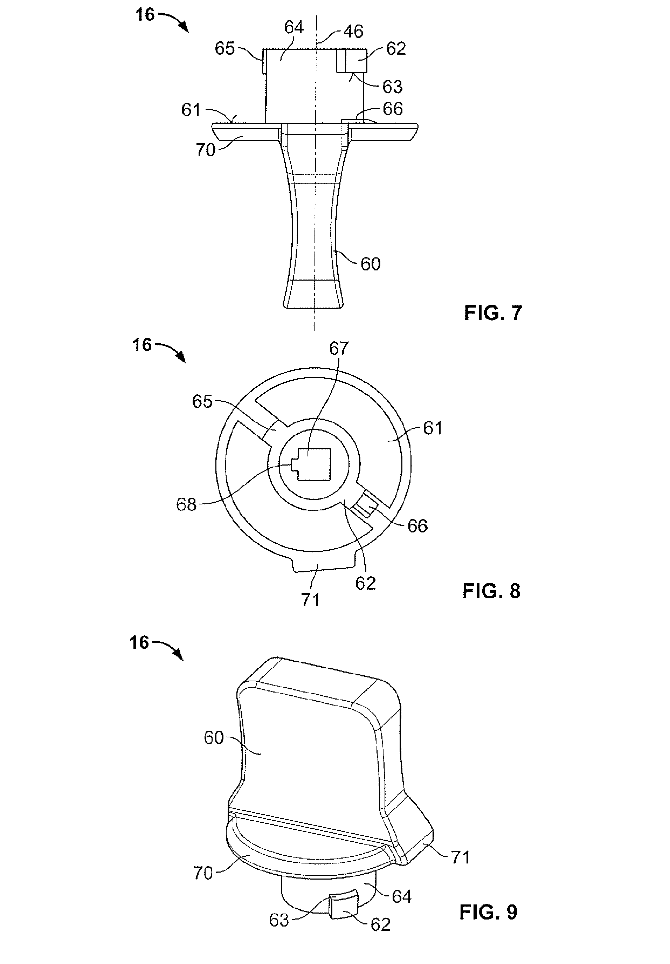

Figure 7 is a side view of the rotary knob 16. The rotary knob 16 has in this case a gripping face 60 which is embodied in an elongate manner perpendicularly to the axis of rotation 46 in order to make it easier for an operator to turn the rotary knob 16. The gripping face 60 also has an indentation for a good grip when detaching the connector module 13, 21. Adjoining the gripping face 60, there follows a plate-shaped region 70 having a diameter larger than that of an adjoining cylindrical portion 64. The plate-shaped region 70 has on an underside the contact face 61 as an axially arranged face which axially demarcates the plate-shaped region 70 from the cylindrical portion 64. A stop stud 66 is also arranged on the contact face 61 in order to restrict the range of rotation of the rotary knob 16 with further abutment faces 93, 930 on the cover 89, 901. Two opposing latching elements 62, 65, which each have a latching face 63 and are associated with the opposing first contact face 61, are arranged at an axial end of the cylindrical portion 64.

Figure 8 is a plan view from below onto the rotary knob 16. The cylindrical portion 64 of the rotary knob 16 comprises on its axial end face a retainer 67 with a groove 68. The retainer 67 is in this case designed to receive the square 31 for a form-fitting connection of the latching bolt 30. The first web 45 of the latching bolt 30 engages with the groove 68 in the retainer 67 so that the rotary knob 16 is oriented in relation to the latching bolt 30 and can assume only one defined position in relation to the latching bolt 30.

Figure 9 is a perspective view of the rotary knob 16. The gripping face 60 has at an outer radial region a pointer 71 which is designed to indicate the various positions of the rotary knob 16 by pointing to the marking 11 on the cover 89, 901 of the connector module 13,21.

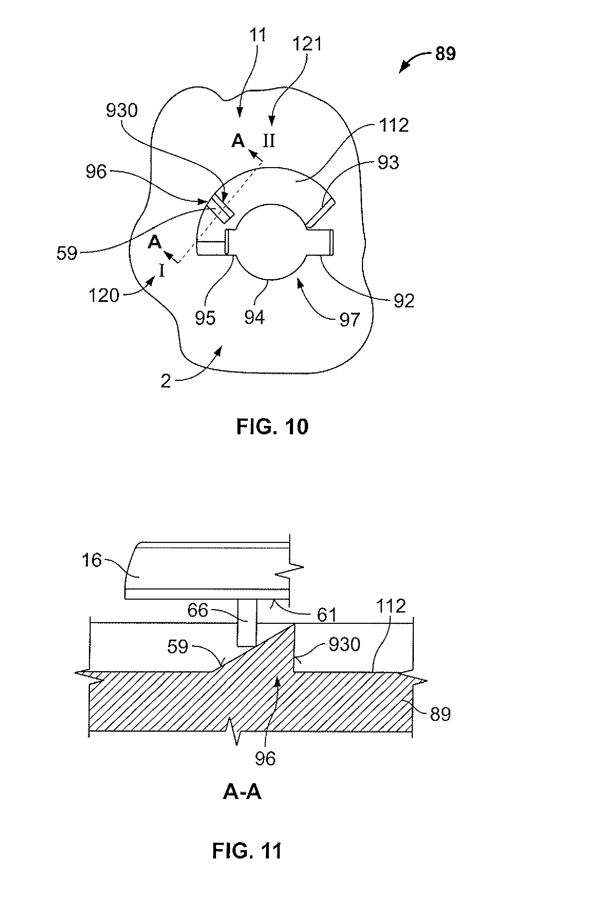

Figure 10 shows a detail in a plan view onto a region of the rotary closure 2 of the first cover 89. The region of the rotary closure 2 is embodied in the same way both on the first cover 89 of the first connector module 13 and on the second cover 901 of the second connector module 21. In this case, the roughly centrally positioned rotary closure 2 has the through-opening 97 with the circumferential contour 94. The circumferential contour 94 is divided into two opposing semicircular portions which are separated from each other by two rectangular recesses 92, 95 which are arranged opposing each other. Furthermore, the marking 11 for an opening position 120 (I) and a latching position 121 (II) is applied to the first cover 89. A partly annular region of rotation 112, which is sunk slightly from the surface of the first cover 89, is also arranged around a partial region around the through-opening 97. The region of rotation 112 is delimited on the right-hand side by a second abutment face 93. The second abutment face 93 protrudes in this case somewhat from the surface of the region of rotation 112, its side faces being arranged perpendicularly to the surface of the first cover 89. Furthermore, a stop element 96 is arranged in the region of rotation 112. The stop element 96 is shown in Figure 11 in section along a sectional plane A-A.

Figure 11 is a sectional view of the sectional plane A-A shown in Figure 10. A part of the rotary knob 16 is also depicted in addition to the first cover 89. The stop element 96 has a cross section of a right-angled triangle, a third abutment face 930 being arranged perpendicularly to the surface of the first cover 89. The hypotenuse is formed as an oblique sliding face 59.

The region of rotation 112 of the rotary knob 16 is restricted by the two abutment faces 93, 930. The rotary knob 16 is turned in the clockwise direction in order to move the rotary knob 16 from the assembly position into the working region between the direction of rotation means 11. In the region of the stop element 96, the stop stud 66 of the rotary knob 16 slides over the obliquely arranged sliding face 59 of the stop element 96. The increase associated therewith in the area of contact 61 with the first cover 89 is accommodated via elastic deformation of the two latching elements 62, 65. If the rotary knob 16 is turned further, the first contact face 61 rests again, after exceeding the maximum height of the stop element 96, against the first cover 89. Excessive turning of the stop element 96 is prevented in that the stop stud 66 strikes against the perpendicularly positioned third abutment face 930. The perpendicular arrangement of the third abutment face 930 prevents the stop stud 66 from being turned beyond the third abutment face 930.

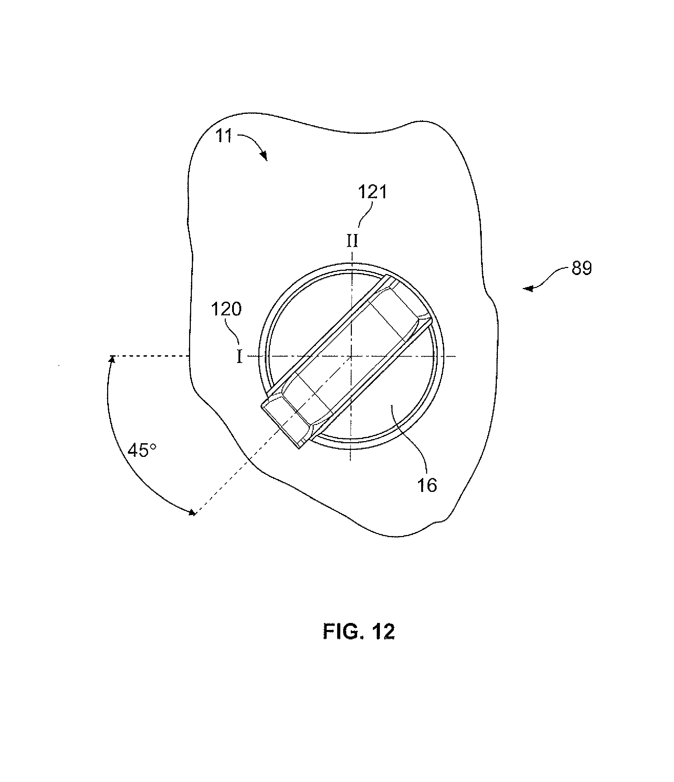

Figure 12 shows a detail of the first cover 89 in a plan view in an assembly position. The rotary closure 2 is attached to the second cover 901 just as it is to the first cover 89. For assembly, the rotary knob 16 is located, in an assembly position, turned out of the actual region of rotation 112 of the rotary knob 16 by about 45°. This position is necessary in order to allow the two latching elements 62, 65 of the rotary knob 16 to be guided through the two recesses 92, 95 in the first cover 89. In order to latch the rotary knob 16 to the first cover 89, the rotary knob 16 is guided into the actual region of rotation 112 between the marking 11 for the opening position 120 and the latching position 121.

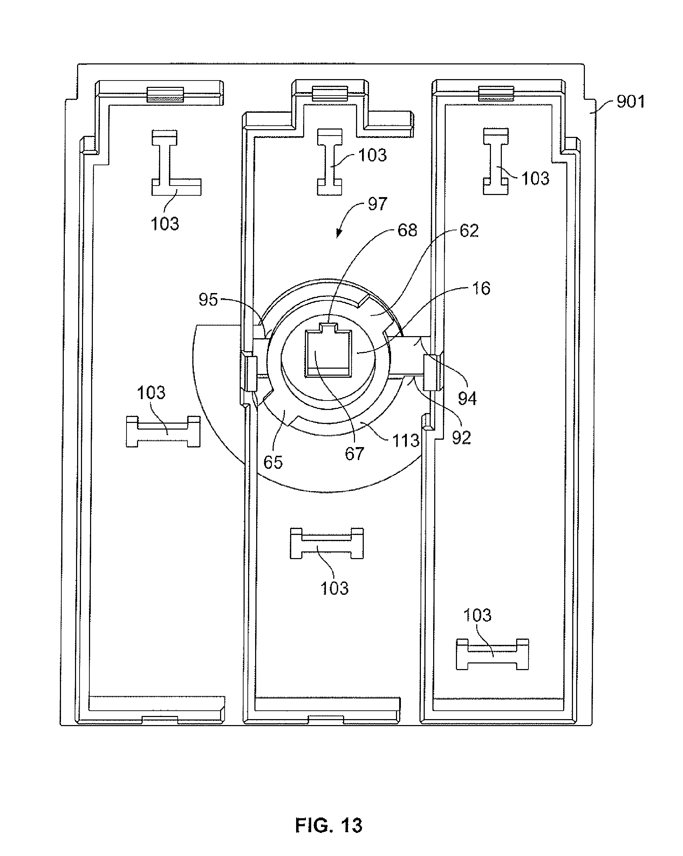

Figure 13 is a perspective illustration of the second cover 901 of the connector module 21. In this case, both the second cover 901 and the rotary knob 16 are illustrated viewed from below. The second cover 901 has in this case a third fastening face 113 which is arranged around the through-opening 97. If the rotary knob 16 is guided, in the assembly position, through the through-opening 97 using the two latching elements 62, 65, then the rotary knob 16 can be fastened to the second cover 901 by turning. In this case, the two latching elements 62, 65 engage behind the second cover 901 and fasten the rotary knob 16 as a result of the latching faces 63 resting against the third fastening face 113. Although the latching faces 63 rest against the third fastening face 113, they are not braced in order to allow the rotary knob 16 to turn from the opening position 120 to the latching position 121. On the first cover 89, as on the second cover 901, the latching elements 62, 65 engage behind the cover in order to fasten the rotary knob 16 to the first cover 89. The first cover 89 of the first connector module 13 is embodied in the same manner as the second cover 901 in relation to the through-opening and the fastening of the rotary knob 16. Six holding-down means 103 are provided on the inner side of the cover 901, two respective holding-down means 103 being provided to press down a current guide 80, 82, 84.

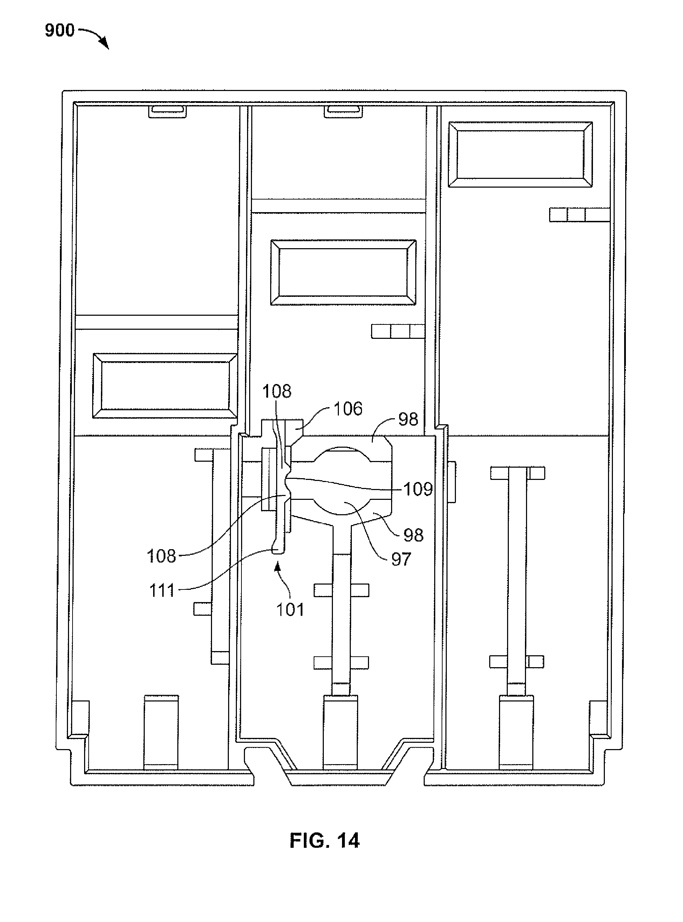

Figure 14 is a plan view onto a second housing 900 of the connector module 21 according to a second embodiment. The current guides and also the contacts thereof, the latching bolt 30 and further components are not shown in the second housing 900. A resilient interlocking 101 with a locking spring 111, which is fastened on one side to the housing 900 by means of the locking spring fastening 106, is arranged at the through-opening 97. The locking spring 111 has two elevations 108 which together form a well 109 in which a locking cam 34, 40 of the latching bolt 30 can engage in the latching position 121 or the opening position 120. Instead of the resilient interlocking 101, it is also possible to provide other locking means which allow interlocking of the latching bolt 30 in the latching position 121 or the opening position 120.

The second housing 900 also has on the floor the bearing face 98 which serves the latching bolt 30 as an abutment face as a first axial bearing face. The first housing 90 of the first connector module 13 is embodied identically to the second housing 900 in relation to the bearing arrangement and the interlocking of the latching bolt.

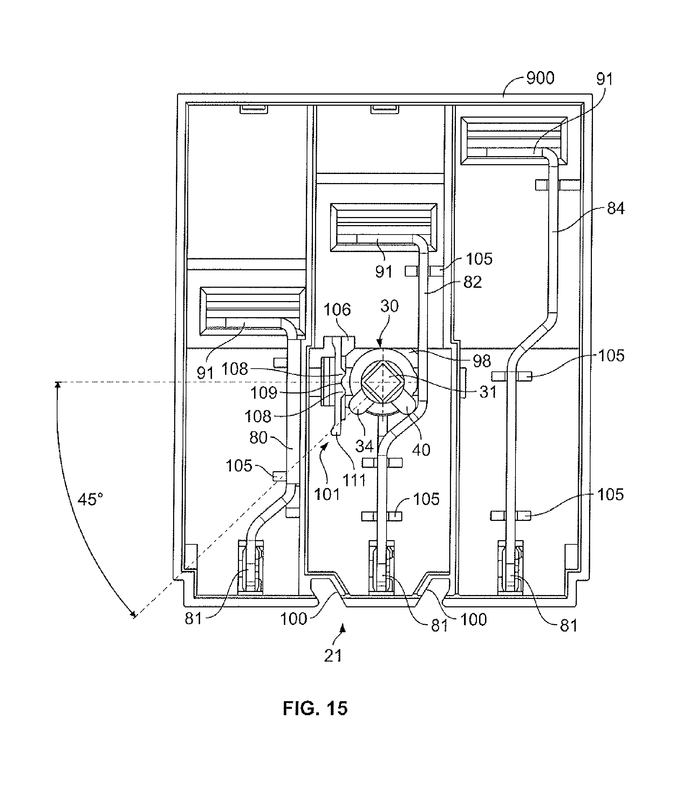

Figure 15 is a plan view onto the second connector module 21 with built-in components. The components described in this case have the same functions as for the first connector module 13. The current guides 80, 82, 84 are fastened in the second housing 900 by means of the fastening holders 105. The latching bolt 30 is arranged on the bearing face 98. The latching bolt 30 issues again in this case at the underside of the second housing 900. The resilient interlocking 101 for defining the opening position 120 and the latching position 121 is brought about by one of the two locking cams 34, 40 engaging in the resilient interlocking 101 or in the well 109 therein. The orientation of the locking cams 34, 40 corresponds in this case to the opening position 120 or the latching position 121, so the rotary closure 2 can interlock in one of the two positions and cannot become automatically detached, for example as a result of vibrations. As a result of the one-sided locking spring fastening 106 and the formation of the resilient interlocking 101 with the locking spring 111, the latching bolt 30 can reversibly engage in the interlocking 101.

The second housing 900 also has, for fastening the electrical component 17, a dovetail opening 100 with which the corresponding dovetail of the electrical component 17 engages. The latching bolt 30 is secured in an axial direction as a result of the first abutment face 35 and the bearing face 98. The second securing is carried out as a result of the connection of the latching bolt 30 to the rotary knob 16 and the second cover 901.

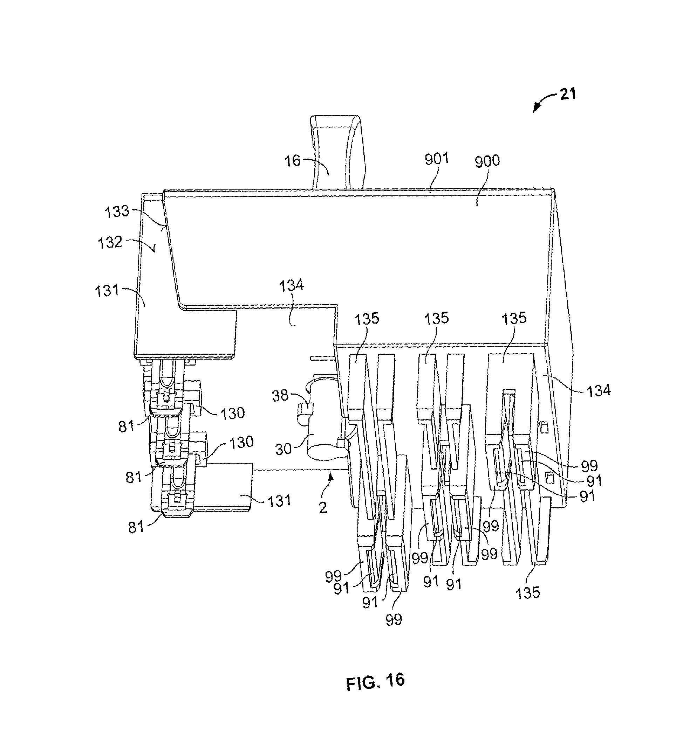

Figure 16 is a perspective view from below of the second connector module 21. In this case, the latching bolt 30 of the rotary closure 2 protrudes from an underside 134 in the central position. The latching bolt 30 and also the rotary knob 16 are in the latching position 121. The first guide elements 99 for a respective bus bar 22 are arranged in a first partial region of the underside 134 of the housing 900. Each first guide element 99 comprises in this case a first connecting element 91 which at least partly surrounds the power strip. Furthermore, a respective second guide element 135 is associated with each first guide element 99 in order to facilitate orientation for plugging-on the second connector module 21 in relation to the bus bar 20. In this case, the side faces of the guide elements 99, 135 rest against the side faces of the separating strips 23 and guide the second connector module 21 during plugging-on. At least one direction of displacement is defined by the two guide elements 99, 135.

In a second partial portion of the second connector module 21, a plurality of second connecting elements 81 are arranged in an edge region of the underside 134 toward a side face of the second housing 900. The second connecting elements are in this case axially surrounded by a closure element 130 in a partial region. Two plate-shaped third guide elements 131, which protrude beyond an obliquely arranged side face of the housing 900, are also arranged in the corner region of the side face of the housing 900. The third guide elements 131 each have on their outwardly directed side faces a fourth abutment face 132. The obliquely arranged side face is inclined in relation to the opposing side face arranged at right angles to the surface of the cover 901, so a first obliquely extending housing face 133 is formed on the second guide elements 131.

On the underside, the first connector module 13 has the same construction as the second connector module 21.

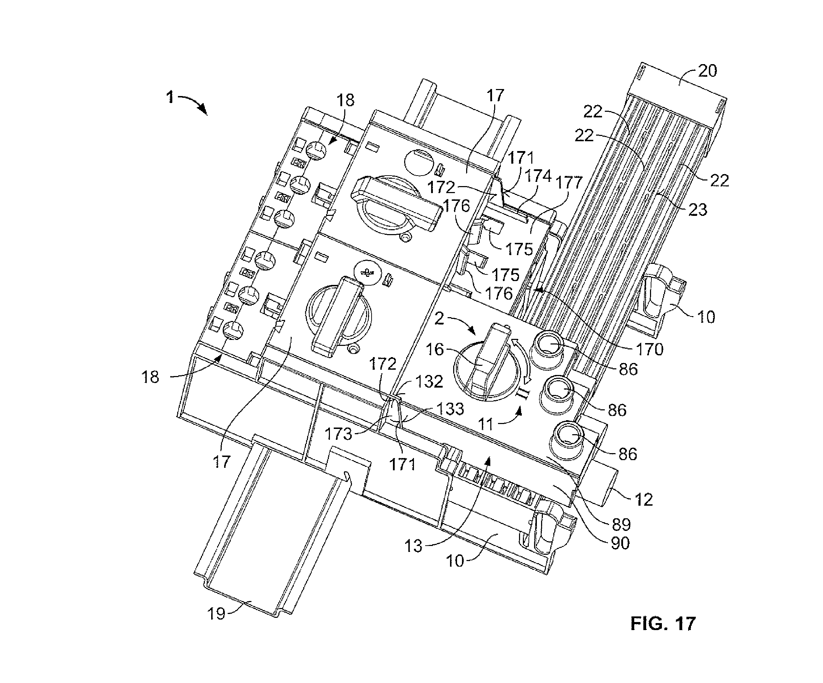

Figure 17 is a perspective view of the plug-in module system 1. In this case, two holders 10, between which two electrical components 17 are arranged, are fastened to the top hat rail 19. The two holders 19 serve to fasten the distributing bus bar 20. A first connector module 13 is arranged on the distributing bus bar 20 for feeding current into the distributing bus bar 20. The first connector module 13 is in this case merely plugged-on, but not latched by means of the rotary closure 2 to the first electrical component 17 and the distributing bus bar 20. No connector module is arranged on the second electrical component 17. The two electrical components 17 have the connection strip 18 for connecting further electrical components. The electrical component 17 is contacted via a connection region 170 which is arranged opposite the connection strip 18 and is concealed in the first electrical component 17 by the first connector module 13. For this purpose, the electrical component 17 has in the connection region 170 a plurality of contact openings 175 on a surface 177. A respective slot 174 as well as a second web172 are also arranged on the surface 177 at right angles to the distributing bus bar 20 in the region of the side faces of the electrical component 17. Furthermore, the dovetail 176 is arranged centrally between the two second webs 172 on the side face facing the distributing bus bar.

One of the two connector modules 13, 21 can be used to connect the electrical component 17 to the distributing bus bar 20. For this purpose, the second connecting elements 81 of the connector module 13, 21 engage with the contact openings 175 and contact in the electrical component 17 contact sockets (not shown). The contact openings 175 are closed by the closure elements 130 in order in this way to prevent moisture from seeping into the electrical component 17, for example.

In order to define the position of the connector module 13, 21, the connector module 13, 21 engages with a slot 174 using the second respective guide element 131. Furthermore, the dovetail 176 engages with the dovetail opening 100 on the side face of the connector module 13, 21. These two engagements each define two possible directions of displacement of the connector module 13, 21. In addition, the abutment of the fourth abutment faces 132 against the second webs 172 prevents a displacement of the connector module 13, 21 parallel to the distributing bus bar 20. The first obliquely extending housing face 133 helps, together with the corresponding, likewise obliquely extending second housing face 171 of the second web 172, to make it easier to find the plug-on position of the connector module 13, 21.

The underside 134 of the connector module 13, 21 rests on the surface 177 of the connection region 170 in the assembled state. Furthermore, the underside 134 rests in the region of the first guide elements 99 against an upper side 23 of the distributing bus bar 22.

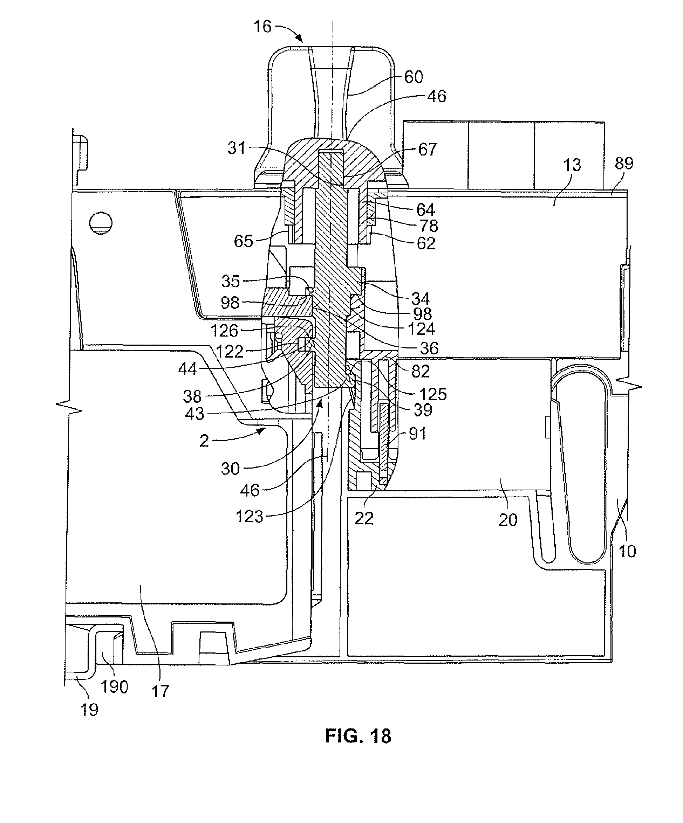

Figure 18 is a side view of the plug-in module system 1 with a partial section in the region of the rotary closure 2. In this case, the electrical component 17 is fastened to the top hat rail 19 by means of two top hat rail holders 190. The electrical component 17 may for example be an overload protector for an electric motor. For this purpose, an electric motor or a contactor can be connected to the connection strip 18 of the electrical component 17. It is however conceivable to arrange a different module instead of the electrical component 17. The important thing is that the other module is also fastened to the top hat rail and has a first engagement opening 122.

Although the first connector module 13 will be described hereinafter, the first connector module can also be replaced by the second connector module 21 or by a different module. What matters is that the fastening is carried out by means of the plug-in module system 1 described hereinafter. The two connector modules 13, 21 are in this case regarded as being equivalent.

The electrical component 17 is fastened to the top hat rail 19 by means of a top hat rail holder 190. The holder 10 for fastening the distributing bus bar 20 is likewise arranged on the top hat rail 19. The distributing bus bar serves to distribute the electrical current to the individual electrical components 17 by means of the bus bars 22. The electrical connection between the distributing bus bar 20 and the electrical component 17 is produced by means of the first connector module 13. In addition, the first connector module 13 also serves, in relation to the second connector module 21, to feed electrical current into the distributing bus bar 20. The second connector module 21 serves merely to connect an electrical component to the distributing bus bar 20. For fastening, both the first connector module 13 and the second connector module 21 have the rotary closure 2 with the rotary knob 16 and the latching bolt 30.

In order to establish an electrical connection between the electrical component 17 and the distributing bus bar 20, the first connector module 13 is plugged in the opening position 120 onto the distributing bus bar and the electrical component. In this case, the second connecting elements 81 establish an electrical contact to the electrical component 17, whereas the first connecting elements 91 partly surround the bus bars 22. The distributing bus bar 20 is connected to the electrical component 17 via the current guides 80, 82, 84.

For turning the rotary closure, the latching bolt 30 is mounted on its centring collar 36 with which a first guide hole 124 is associated in the housing 90. The second radial mounting is carried out via the rotary knob 16, the cylindrical portion 64 of which is guided through a second guide hole 78 in the first cover 89 of the first connector module 13. Furthermore, the second possible axial direction of displacement of the latching bolt 30 over the square 31 and the retainer 76 is also defined as a result of the fact that the rotary knob 16 engages behind the first cover 89 using the latching elements 62, 65.

In order to fasten the first connector module 13 to the electrical component 17 and the distributing bus bar 22, the electrical component 17 has a first engagement opening 122 and the distributing bus bar 20 has a second engagement opening 123. The first engagement opening 122 also has a fourth fastening face 126. Furthermore, the second engagement opening 123 has a fifth fastening face 125.

The first connector module 13, like the second connector module 21, is assembled in that the latching bolt 30 is introduced into the first housing 90 in the assembly position of the rotary knob 16. The first housing 90 is closed by means of the first cover 89 and subsequently the rotary knob 16 is placed onto the latching bolt 30 in the assembly position. Subsequently, the rotary knob 16 is turned through 45° in the clockwise direction, the rotary knob 16 latching on the first cover 89 in the opening position 120. The connector module 13 is fastened by turning the rotary knob 16 into the latching position 121. If the latching bolt 30 is turned by means of the rotary knob 16 once it has been introduced through the through-opening 97, then its two engagement elements 38, 39 engage, as operative elements, with the engagement openings 122, 123 in the electrical component 17 or the connecting bar 20. The two engagement elements 38, 39 latch the first connector module 13 in that the fastening faces 125, 126 rest against the fastening faces 43, 44.

In order to disassemble the first connector module 13 from the electrical component 17 and also the distributing bus bar 20, the rotary knob 16 is turned from the latching position 121 (II) into the opening position 120 (I) in the region of rotation 112. As a result, the two engagement elements 38, 39 unlatch the connector module 13. As the first cover 89 is connected to the housing 90 by the locking elements 15, 88, the connector module 13 can be detached from the distributing bus bar 20 via the rotary knob 16 in the opening position 120. This has the advantage that disassembly is carried out promptly and without potential damage. The connector module 13 can afterwards be reassembled in the reverse order.

## Claims

1. Connector module (13; 21) for electrically connecting an electrical component (17) to a distributing bus bar (20), wherein the connector module (13; 21) has a rotary closure (2) comprising operative elements (38, 39) which fasten the connector module (13; 21) to the distributing bus bar (20) and the electrical component (17).

2. Connector module (13; 21) according to claim 1, wherein the rotary closure (2) comprises a latching bolt (30) having at least two engagement elements (38, 39) as operative elements which are designed each to engage with an engagement opening (122, 123) in the distributing bus bar (20) and the electrical component (17).

3. Connector module (13; 21) according to claim 2, wherein the latching bolt (30) has at least one locking cam (34, 40) which is associated with a resilient interlocking (101) of the connector module (13; 21).

4. Connector module (13; 21) according to either claim 2 or claim 3, wherein the latching bolt (30) has a first abutment face (93) which at least partly radially surrounds the latching bolt (30) and is associated with an inner bearing face (98) of the connector module (13; 21).

5. Connector module (13; 21) according to any one of claims 2 to 4, wherein a rotary knob (16) is pluggably arranged at a first axial end of the latching bolt (30), the engagement elements (38, 39) being arranged opposite the rotary knob (16) at a second axial end of the latching bolt and releasing the connector module (13; 21) as a function of their rotational position.

6. Connector module (13; 21) according to any one of claims 1 to 5, wherein the rotary knob (16) has at least one latching element (62, 65) which is arranged on a circumferential face of a cylindrical portion (64) of the rotary knob (16) and is designed to engage behind a cover (89; 901) of the connector module (13; 21) during turning of the rotary knob (16) and to fasten the rotary knob (16) to the cover (89; 901).

7. Connector module (13; 21) according to claim 6, wherein the rotary knob (16) has at least one stop stud (66) which is arranged radially to an axis of rotation (46) of the rotary knob (16) and which is associated with at least a second abutment face (93, 930) on the cover (89; 901) of the connector module (13; 21).

8. Connector module (13; 21) according to either claim 6 or claim 7, wherein a stop element (96) is arranged on a face of the cover (89; 901) of the connector module (13; 21), the stop element (96) being designed to have the stop stud (66) slide over the stop element in one direction of rotation of the rotary knob (16) and to block turning of the rotary knob (16) in the opposite direction.

9. Connector module (13; 21) according to any one of claims 5 to 8, wherein a retainer (67) on the rotary knob (16) for the latching bolt (30) and also an axial end of the latching bolt (30) are embodied as a form-fitting connection (31, 67).

10. Connector module (13; 21) according to any one of claims 5 to 9, wherein the rotary knob (16) has at least one gripping face (60) which is embodied in an elongate manner and protrudes beyond the diameter of a cylindrical portion (64).

11. Connector module (13; 21) according to any one of claims 1 to 10, wherein the connector module (13; 21) has at an underside (134) at least one closure element (130) which is designed to close a contact opening (175) through which a connecting element (81) is guided.

12. Connector module (13; 21) according to any one of claims 1 to 11, wherein at least one connecting element (81; 91), which is at least partly surrounded by a first guide element (99) for engaging with the distributing bus bar (20), is arranged on the connector module (13; 21) at the underside (134).

13. Connector module (13; 21) according to any one of claims 1 to 12, wherein a second guide element (131), which is provided for engaging in a slot (174) in the electrical component (17), is arranged on a side face of the connector module (13; 21).

14. Connector module (13; 21) according to claim 13, wherein the second guide element (131) has a third abutment face (132) which is associated with a fourth abutment face (172) of the electrical component (17).

15. Plug-in module system (1) with a distributing bus bar (20) and an electrical component (17), wherein the electrical component (17) is connected to a connector module (13; 21) and is electrically connected and has a rotary closure (2) for latching the connector module (13; 21) to the distributing bus bar (20) and the electrical component (17), the rotary closure (2) having operative elements (38, 39) which engage with the distributing bus bar (20) and the electrical component (17).
